# EUROPÄISCHE PATENTSCHRIFT

(11) **EP 1 120 220 B1**
(45) Veröffentlichungstag und Bekanntmachung des Hinweises auf die Patenterteilung: **29.12.2004**
(21) Anmeldenummer: 01250016.1
(22) Anmeldetag: 12.01.2001
(51) Int. Cl.: B29C 45/14

(54) **Verfahren und Vorrichtung zum Herstellen eines Kunststoff-Formteiles**
Method and apparatus for producing a plastic moulded part
Procédé et dispositif pour fabriquer une pièce moulée en matière plastique

(30) Priorität: 28.01.2000 DE 10004735
(43) Veröffentlichungstag der Anmeldung: 01.08.2001
(73) Patentinhaber: Volkswagen AG, 38436 Wolfsburg (DE)
(72) Erfinder: Gabbert, Heiko, 49377 Vechta (DE); Berlin, Ralf, 39638 Wiepke (DE); Mracek, Steffi, 39638 Gardelegen (DE)
(74) Vertreter: Schneider, Henry, Dipl.-Ing.

(56) Entgegenhaltungen:
- EP-A- 0 829 337
- PATENT ABSTRACTS OF JAPAN vol. 14, no. 424 (M-1024), 12. September 1990 (1990-09-12) -& JP 02 167713 A (HAYASHI TERENPU KK), 28. Juni 1990 (1990-06-28)
- PATENT ABSTRACTS OF JAPAN vol. 14, no. 209 (M-0968), 27. April 1990 (1990-04-27) -& JP 02 047021 A (TAKASHIMAYA NIPPATSU KOGYO KK), 16. Februar 1990 (1990-02-16)
- PATENT ABSTRACTS OF JAPAN vol. 1998, no. 03, 27. Februar 1998 (1998-02-27) -& JP 09 286042 A (KANTO AUTO WORKS LTD), 4. November 1997 (1997-11-04)
- PATENT ABSTRACTS OF JAPAN vol. 1995, no. 11, 26. Dezember 1995 (1995-12-26) -& JP 07 195433 A (TOKYO SEAT KK), 1. August 1995 (1995-08-01) -& DATABASE WPI Week 199539 Derwent Publications Ltd., London, GB; AN 1995-298701 XP002166814

## Beschreibung

Die Erfindung betrifft ein Verfahren und eine Vorrichtung zum Herstellen eines Kunststoff-Formteiles.

Aus der DE 197 34 686 A1 ist ein Kunststoff-Formteil sowie ein Verfahren und eine Vorrichtung zu dessen Herstellung bekannt. Die DE 197 34 686 A1 schlägt vor, ein Kunststoff-Formteil mit einem Kunststoff-Träger auszustatten, der mehrere Felder umfasst, wobei mindestens eines dieser Felder mit einem Abdeckmaterial kaschiert ist und mindestens ein anderes dieser Felder spritzblank ist. Über die Fläche des Kunststoff-Formteiles ergibt sich hierbei wenigstens ein direkter Übergang zwischen einem spritzblanken Feld und einem mit einem Abdeckmaterial kaschierten Feld.

Soll das Kunststoff-Formteil mehrere, benachbart angeordnete, mit Abdeckmaterial kaschierte Felder aufweisen, ist bekannt, diese einzeln zu fertigen und später zu dem Gesamt-Kunststoffträger zu fügen. Hierbei ergeben sich insbesondere in den Übergangsbereichen zwischen benachbart mit Abdeckmaterial kaschierten Feldern Verbindungsprobleme.

Zur Lötung dieser Verbindungsprobleme offenbart die JP-A-02 167713 ein Verfahren zur Herstellung eines Kunststoff-Formteiles. Das Verfahren bedient sich einer Vorrichtung, einem Formwerkzeug, in dessen Formhohlraum ein erstes und zweites Abdeckmaterial berührend oder überlappend eingelegt wird. Der Formhohlraum wird entlang des sich bildenden Übergangsbereiches abgedichtet, so dass zwei Teilformhohlräume entstehen. Nach Einbringen von Kunststoffschmelze wird wenigstens einer der Teilformhohlräume freigegeben, jedoch in nachteiliger Weise erst dann, wenn die Schmelze gegen ein, von einem Federelement gehaltenen abdichtenden Element aufläuft und somit bereits die gesamte Kavität ausgefüllt hat.

Der Erfindung liegt die Aufgabe zugrunde, ein Verfahren und eine Vorrichtung anzugeben, mittels denen in einfacher Weise ein Kunststoff-Formteil mit in Übergangsbereichen benachbarten, mit Abdeckmaterial kaschierten Feldern erhältlich ist.
Erfindungsgemäß wird diese Aufgabe durch ein Verfahren mit den im Anspruch 1 genannten Merkmalen gelöst. Dadurch, dass
(f) nach Erreichen eines vorgegebenen Füllungsgrades der Schmelze in wenigstens einem der Teil-Formhohlräume der Übergangsbereich freigegeben wird und hierdurch ein weiterer Teil-Formhohlraum erzeugt wird und
(g) in diesen weiteren Teil-Formhohlraum die Schmelze des Kunststoffes eingebracht wird,
wird vorteilhaft erreicht, dass Kunststoff-Formteile mit benachbarten, mit Abdeckmaterial kaschierten Feldern in einfacher Weise in einem Arbeitsgang hergestellt werden können. Das definierte Freigeben des Übergangsbereiches zwischen den benachbarten Feldern erfolgt zu einem Zeitpunkt, zu dem der wenigstens eine Teil-Formhohlraum bereits in einem definierten Füllungsgrad mit der Schmelze des Kunststoffes versehen ist. Hierdurch wird verhindert, dass durch Freigeben des Übergangsbereiches die relative Position der Abdeckmaterialien sich verändert. Diese können somit in ihrem Übergangsbereich mit der Schmelze des Kunststoffes hinterspritzt werden, so dass sich am fertigen Kunststoff-Formteil ein Übergang im Bereich des Kunststoff-Trägers nicht ergibt. Dieser ist somit einstückig über die gesamten Felder mit den benachbarten Abdeckmaterialien ausgebildet. Eine definierte Trennlinie zwischen den benachbarten Abdeckmaterialien kann durch die Formgebung der Abdeckmaterialien selber bestimmt werden, so dass auch bei dem dann einstückig ausgebildeten Kunststoff-Träger optische Beeinträchtigungen des fertigen Kunststoff-Formteiles nicht zu erwarten sind.

In bevorzugter Ausgestaltung der Erfindung ist vorgesehen, dass die Schmelze des Kunststoffes zunächst in den ersten Teil-Formhohlraum eingebracht wird, anschließend in den wenigstens einen Übergangsbereich eingebracht wird und anschließend in den wenigstens einen zweiten Teil-Formhohlraum eingebracht wird. Durch eine derartige Vorgehensweise kann eine Fließfront der Schmelze in dem gesamten Formhohlraum erzeugt werden, die sich kontinuierlich über sämtliche Felder, einschließlich der Überlappungsbereiche, fortsetzt, so dass eine homogene Verteilung der Schmelze in dem Formhohlraum möglich ist.

In weiterer bevorzugter Ausgestaltung der Erfindung kann auch vorgesehen sein, dass zunächst eine erste Schmelze eines Kunststoffes in den wenigstens einen ersten Teil-Formhohlraum eingebracht wird, anschließend oder zumindest zeitversetzt eine zweite Schmelze in den wenigstens einen zweiten Teil-Formhohlraum eingebracht wird und anschließend der wenigstens eine weitere Teil-Formhohlraum im Übergangsbereich erzeugt wird und dieser dann mit der ersten Schmelze und/oder der zweiten Schmelze aufgefüllt wird. Hierdurch wird vorteilhaft ein gleichzeitiges großflächigeres Füllen des Gesamt-Formhohlraumes mit der Schmelze des Kunststoffes möglich, so dass sich die Bearbeitungszeit verringert.

In bevorzugter Ausgestaltung der Erfindung ist ferner vorgesehen, dass der wenigstens eine Teil-Formhohlraum im Übergangsbereich durch eine Fließfront der ersten Schmelze und/oder der zweiten Schmelze des Kunststoffes erzeugt wird. Hierdurch wird vorteilhaft möglich, den wenigstens einen Teil-Formhohlraum im Übergangsbereich selbsttätig freizugeben, so dass eine zusätzliche Überwachung des Füllungsgrades wenigstens eines der Teil-Formhohlräume entfällt. Dadurch, dass die Fließfront der Schmelze den wenigstens einen Teil-Formhohlraum im Übergangsbereich öffnet, ist gewährleistet, dass bei Erreichen der Fließfront des Übergangsbereiches bereits ein definierter Füllungsgrad des wenigstens einen, vorher definierten Teil-Formhohlraumes gegeben ist. Ferner kann bevorzugt vorgesehen sein, dass durch die Fließfront der Schmelze beim Füllen des wenigstens einen weiteren Teil-Formhohlraumes im Übergangsbereich wenigstens eines der Abdeckmaterialien, vorzugsweise beide der Abdeckmaterialien, in ihren Randbereichen in ihre Endposition verlagert werden. Hierdurch wird ein definierter Übergang der Abdeckmaterialien am späteren Kunststoff-Formteil sichergestellt.

Erfindungsgemäß wird die Aufgabe ferner durch eine Vorrichtung mit den im Anspruch 7 genannten Merkmalen gelöst.

Die Vorrichtung selber ist einfach aufgebaut, wobei zur Ausbildung des Formhohlraumes zwei Matrizen in an sich bekannter Weise gefügt werden. Als bewegliches Teil ist lediglich das erste Mittel, das gegebenenfalls aus mehreren, einzeln bewegbaren Teilen besteht, vorzusehen, das zunächst einen Übergangsbereich zwischen den zwei Feldern mit den Abdeckmaterialien abdichtet und vorzugsweise gleichzeitig die Abdeckmaterialien in ihren Randbereichen fixiert. Das erste Mittel, das vorzugsweise als Rahmenschieber ausgebildet ist, lässt sich in einfacher Weise in die Vorrichtung integrieren und durch eine relativ klein bauende Vorrichtung realisieren.

In bevorzugter Ausgestaltung der Erfindung ist vorgesehen, dass jedem der Teil-Formhohlräume wenigstens eine Einrichtung, insbesondere Düse, Stange oder dergleichen, zum Einbringen der Schmelze zugeordnet ist. Hierdurch kann vorteilhaft gleichzeitig in die wenigstens zwei Teil-Formhohlräume jeweils eine Schmelze eines Kunststoffes eingebracht werden. Ferner wird hierdurch möglich, in die Teil-Hohlräume unterschiedliche Schmelzen von Kunststoffen einzubringen, so dass je nach Qualitätsanforderungen und/oder je nach in dem jeweiligen Bereich verwendeten Abdeckmaterial eine Optimierung der Kunststoffe erfolgen kann.

In weiterer bevorzugter Ausgestaltung der Erfindung ist vorgesehen, dass die zweiten Mittel, die zur Verlagerung der ersten Mittel führen, in die ersten Mittel integriert sind. Das erste Mittel umfasst bevorzugterweise Auflaufelemente, insbesondere geneigte Ebenen oder dergleichen, die von der Fließfront der in dem wenigstens einen Teil-Hohlraum eingefüllten Schmelze mit einer Fließkraft beaufschlagbar sind. Diese Fließkraft führt zum Zurückdrängen der ersten Mittel aus dem Formhohlraum, so dass der Übergangsbereich zwischen den benachbarten Feldern mit den zwei Abdeckmaterialien hierdurch automatisch durch die Schmelze freigegeben wird. Hierdurch wird ein besonders einfacher Aufbau der Vorrichtung erzielt, der ohne aufwendige Antriebssteuerungs- oder andere Hilfseinrichtungen auskommt.

Die Aufgabe wird ferner durch ein Kunststoff-Formteil mit den im Anspruch 15 genannten Merkmalen gelöst. Dadurch, dass der Kunststoff-Träger des Kunststoff-Formteiles einstückig ausgebildet ist, das heißt, auch benachbarte Felder mit getrennten Abdeckmaterialien besitzen den gleichen einstückig (aus einem Guss) hergestellten Kunststoff-Träger, lassen sich Kunststoff-Formteile ohne inneren Übergang im Übergang zwischen benachbarten Abdeckmaterialien herstellen. Diese weisen somit insgesamt eine hohe Festigkeit auf und lassen sich ohne aufwendiges Fügen von Einzelteilen herstellen.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: einen schematischen Teilschnitt durch eine Vorrichtung zur Herstellung von Kunststoff-Formteilen in einem ersten Ausführungsbeispiel und
- Figur 2: einen schematischen Teilschnitt durch eine Vorrichtung zur Herstellung von Kunststoff-Formteilen in einem zweiten Ausführungsbeispiel.

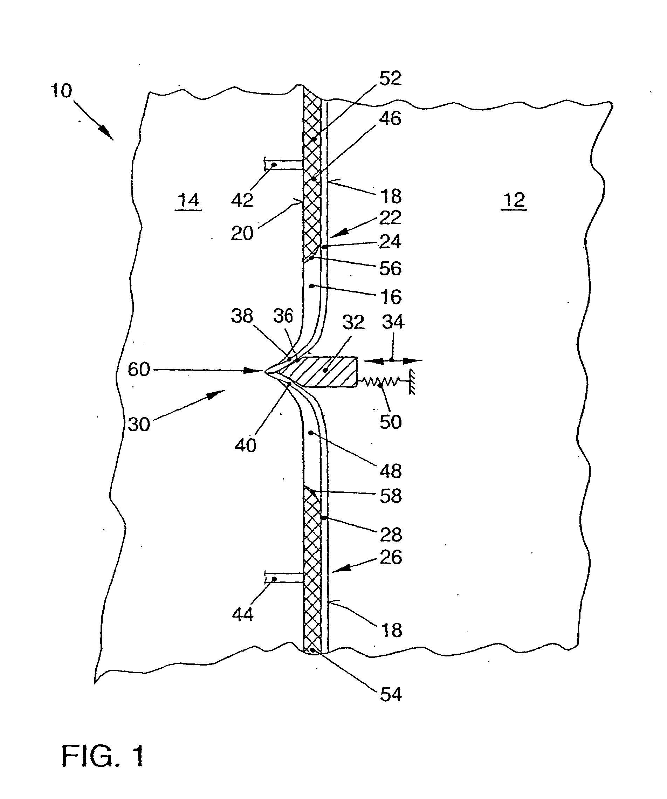

Figur 1 zeigt eine insgesamt mit 10 bezeichnete Vorrichtung zum Herstellen von Kunststoff-Formteilen. Die Vorrichtung 10 ist in einer schematischen Schnittdarstellung ausschnittsweise dargestellt, sofern dies für die Erläuterung der Erfindung wesentlich ist.

Die Vorrichtung 10 umfasst eine erste Matrize 12 und eine gegenüber liegende zweite Matrize 14, die einen Formhohlraum 16 ausbilden. Dieser Formhohlraum 16 bildet die Form eines mittels der Vorrichtung 10 herzustellenden Kunststoff-Formteiles zumindest teilweise nach. Zur Ausbildung des Formhohlraumes 16 besitzt die Matrize 12 eine entsprechend ausgearbeitete Kontur 18 und die Matrize 14 eine gegenüber liegende Kontur 20. Zwischen den Konturen 18 und 20 ist der Formhohlraum 16 ausgebildet.

Der Formhohlraum 16 besitzt einen ersten Bereich 22, in dem an der Kontur 18 ein erstes Abdeckmaterial 24 zumindest teilweise in Anlage gebracht ist. Ferner besitzt der Formhohlraum 16 einen zweiten Bereich 26, innerhalb dem ein zweites Abdeckmaterial 28 an der Kontur 18 zumindest teilweise in Anlage gebracht ist. Die Abdeckmaterialien 24 und/oder 28 können auch teilweise an der Kontur 20 der Matrize 14 anliegen. Die Abdeckmaterialien 24 beziehungsweise 28 können beispielsweise Textilbahnen, Lederbahnen, Kunststofffolien oder dergleichen sein. Hierbei kann das Abdeckmaterial 24 aus dem gleichen Material bestehen wie das Abdeckmaterial 28, es können jedoch auch unterschiedliche Abdeckmaterialien eingesetzt sein. Die Abdeckmaterialien 24 und 28 erstrecken sich jeweils bis zu einem Übergangsbereich 30 zwischen den Bereichen 22 und 26. Die Abdeckmaterialien 24, 28 können hierbei im Übergangsbereich 30 sich gegenseitig berühren oder überlappend angeordnet sein. In ihren Randbereichen können die Abdeckmaterialien lose und/oder fest verbunden sein. Die Randbereiche können beispielsweise verklebt, geheftet oder dergleichen sein. Dies ergibt sich aus den verwendeten Materialien der Abdeckmaterialien beziehungsweise einer Formgestalt des späteren Kunststoff-Formteiles.

In dem gezeigten Ausführungsbeispiel wird die Erfindung anhand eines Übergangsbereiches 30 erläutert. Es ist klar, dass ein Kunststoff-Formteil mehrere Übergangsbereiche 30 zwischen jeweils benachbart angeordneten Abdeckmaterialien aufweisen kann.

In die Matrize 12 ist ein Stempel 32 integriert, der entsprechend dem dargestellten Doppelpfeil 34 in den Formhohlraum 16 hinein beziehungsweise aus diesem hinaus bewegbar angeordnet ist. Der Stempel 32 bildet an seiner dem Formhohlraum 16 zugewandten Seite eine Kontur 36 aus, die der späteren Kontur des Kunststoff-Formteiles entspricht. Die Kontur 18 der Matrize 12 und die Kontur 36 des Stempels 32 bilden somit die spätere Sichtfläche des Kunststoff-Formteiles aus. Im Übergangsbereich 30 liegen Randabschnitte 38 beziehungsweise 40 der Abdeckmaterialien 24 beziehungsweise 28 an der Kontur 36 an. Der Stempel 32 kann gegebenenfalls mehrteilig ausgebildet sein, wenn eine Geometrie des fertigen Formteiles dieses erfordert.

In die Matrize 14 ist wenigstens eine, hier lediglich schematisch angedeutete Düse 42 im Bereich eines Teil-Formhohlraumes 46 und wenigstens eine Düse 44 im Bereich eines Teil-Formhohlraumes 48 angeordnet. Zur Ausbildung der Teil-Formhohlräume 46 und 48 kommt es durch Verlagerung des Stempels 32 in Richtung der Matrize 14, so dass die Randabschnitte 38 und 40 der Abdeckmaterialien 24 beziehungsweise 28 gegen die Kontur 20 der Matrize 14 gedrängt werden. Die Teil-Formhohlräume 46 und 48 sind somit gegeneinander abgedichtet. Der Stempel 32 kann beispielsweise durch ein hier angedeutetes Federelement 50 in Richtung der Matrize 14 gedrängt sein. Denkbar sind auch pneumatische, hydraulische, mechanische oder elektrische Antriebe zum Verlagern des Stempels 32.

Die in Figur 1 dargestellte Vorrichtung 10 zeigt folgende Funktion:

Mittels der wenigstens einen Düse 42 wird in den Teil-Formhohlraum 46 eine erste Schmelze 52 eines Kunststoffes eingebracht. Mittels der wenigstens einen Düse 44 wird eine zweite Schmelze 54 eines Kunststoffes in den Teil-Formhohlraum 48 eingebracht. Die Schmelzen 52 und 54 können hierbei eine unterschiedliche Zusammensetzung, eine unterschiedliche Viskosität und unter unterschiedlichen Drücken eingebracht werden. Möglich ist auch, dass die Schmelzen 52 und 54 die gleiche Zusammensetzung, die gleiche Viskosität und unter gleichem Druck eingebracht werden.

Durch Einbringen der Schmelze 52 in den Teil-Formhohlraum 46 baut dieser eine Fließfront 56 auf, die sich in Richtung des Übergangsbereiches 30 bewegt. Die Schmelze 54 baut ebenfalls eine Fließfront 58 auf, die sich ebenfalls in Richtung des Übergangsbereiches 30 bewegt. Mit zunehmendem Füllungsgrad der Teil-Formhohlräume 46 beziehungsweise 48 wandert die Fließfront 56 beziehungsweise 58 in Richtung des Übergangsbereiches 30. Hier kann vorgesehen sein, dass entweder die Fließfront 56 oder die Fließfront 58 den Übergangsbereich 30 als erstes erreicht. Ferner kann vorgesehen sein, dass die Fließfronten 56 und 58 den Übergangsbereich 30 gleichzeitig erreichen.

In dem Moment, wo die Fließfront 56 und/oder die Fließfront 58 den Übergangsbereich 30 erreicht, baut sich ein Druck an der Kontur 36 des Stempels 32 auf. Die Kraft des Federelementes 50 ist so bemessen, dass diese durch den sich an der Kontur 36 aufbauenden Druck überwunden werden kann. Somit wird bei Erreichen der Fließfront 56 und/oder der Fließfront 58 der Kontur 36 der Stempel 32 in die Matrize 12 hinein bewegt, so dass sich im Übergangsbereich 30 ein weiterer Teil-Formhohlraum 60 ergibt, der quasi einer Erweiterung der Teil-Formhohlräume 46 beziehungsweise 48 entspricht. Dieser wird dann von der Schmelze 52 und/oder 54 gefüllt. Gleichzeitig wird der Randabschnitt 38 des Abdeckmaterials 24 und der Randabschnitt 40 des Abdeckmaterials 28 an die - dann zurück gefahrene - Kontur 36 des Stempels 32 angelegt, so dass die endgültige Formgestalt des späteren Kunststoff-Formteiles erreicht ist.

Nach einem weiteren Ausführungsbeispiel kann vorgesehen sein, dass die Schmelze 52 zunächst in den Teil-Formhohlraum 46 eingebracht wird. Nachdem die Fließfront 56 den Übergangsbereich 30 erreicht, folgt das Zurückdrängen des Stempels 32, so dass ein Übergangsbereich zu dem Teil-Formhohlraum 48 entsteht. Hierdurch kann der Übergangsbereich 30 quasi von einer Seite kommend mit der Schmelze 52 hinterspritzt werden, die sich anschließend in den dann freigegebenen Teil-Formhohlraum 48 ausbreitet.

Nach Erstarren, oder zumindest teilweisem Erstarren der Schmelzen 52 und/oder 54 werden die Matrizen 12, 14 auseinander geführt, so dass das fertige Kunststoff-Formteil mit den dann zwei mit Abdeckmaterial 24 beziehungsweise 28 kaschierten Feldern (Bereiche 22 beziehungsweise 26) entnommen werden kann.

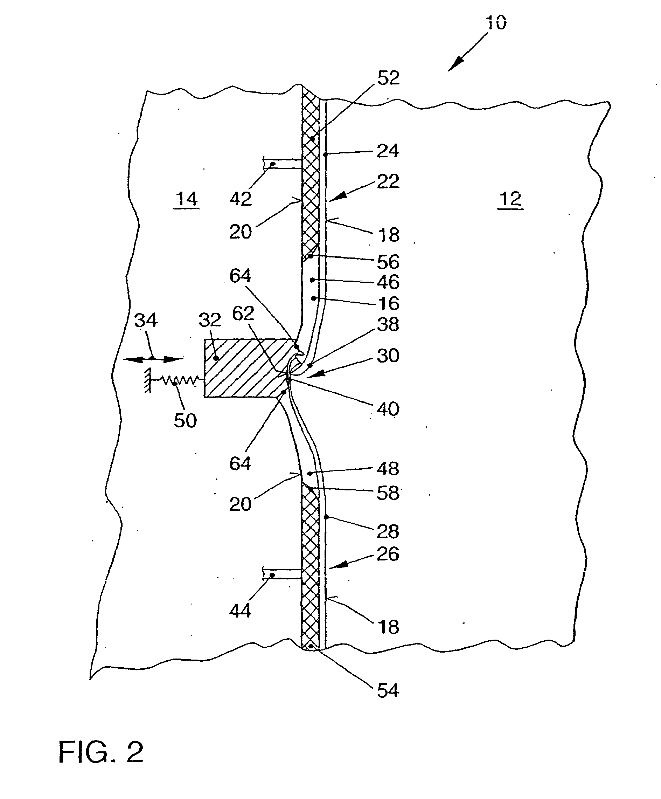

Figur 2 zeigt die Vorrichtung 10 in einem abgewandelten Ausführungsbeispiel, wobei gleiche Teile wie in Figur 1 mit gleichen Bezugszeichen versehen und nicht nochmals erläutert sind.

Bei der in Figur 2 gezeigten Ausführungsvariante ist der Stempel 32 (der gegebenenfalls ebenfalls mehrteilig ausgebildet sein kann) in die Matrize 14 integriert, wobei dieser ebenfalls wieder mittels eines Federelementes 50 in Richtung des Formhohlraumes 16 gedrängt ist. Der Stempel 32 besitzt hier eine dem Formhohlraum 16 zugewandte Kontur 62, die nicht notwendigerweise mit der Kontur 20 der Matrize 14 korrespondieren muss. Mittels des Stempels 32 werden hier die Randabschnitte 38 beziehungsweise 40 der Abdeckmaterialien 24 beziehungsweise 28 gegen die Kontur 18 der Matrize 12 gedrängt. Die Randabschnitte 38 und 40 können hierbei beispielsweise wie dargestellt überlappen. Es kann jedoch auch vorgesehen sein, dass diese auf Stoß aneinander liegen.

Die Funktion der in Figur 2 gezeigten Vorrichtung 10 ist analog der bereits in Figur 1 erläuterten. Die Fließfront 56 der Schmelze 52 und/oder die Fließfront 58 der Schmelze 54 treffen im Übergangsbereich 30 auf Auflaufflächen 64 des Stempels 32. Diese Auflaufflächen 64 verlaufen unter einem von 90° abweichendem Winkel in Bezug auf die Kontur 20 der Matrize 14. Insbesondere verlaufen die Auflaufflächen 64 nicht parallel zu den Richtungsvektoren der Hubbewegung 34 des Stempels 32. Hierdurch wird erreicht, dass bei Auftreffen der Fließfront 56 und/oder der Fließfront 58 auf die Auflaufflächen 64 der Stempel 32 in die Matrize 14 gedrängt wird, so dass im Übergangsbereich 30 wiederum ein weiterer Teil-Formhohlraum 60 freigegeben wird, der anschließend mit der Schmelze 52 und/oder der Schmelze 54 aufgefüllt wird.

Die Hubbewegung 34 des Stempels 32 kann ebenfalls durch hydraulische, pneumatische, mechanische und/oder elektrische Hilfsmittel unterstützt sein.

### BEZUGSZEICHENLISTE

- 10: Vorrichtung
- 12: erste Matrize
- 14: zweite Matrize
- 16: Formhohlraum
- 18,20: Kontur
- 22: erster Bereich
- 24: erstes Abdeckmaterial
- 26: zweiter Bereich
- 28: zweites Abdeckmaterial
- 30: Übergangsbereich
- 32: Stempel
- 34: Doppelpfeil
- 36: Kontur
- 38,40: Randabschnitt
- 42,44: Düse
- 46,48: Teil-Formhohlraum
- 50: Federelement
- 52: erste Schmelze
- 54: zweite Schmelze
- 56,58: Fließfront
- 60: Teil-Formhohlraum
- 62: Kontur
- 64: Auflauffläche

## Patentansprüche

1. Verfahren zum Herstellen eines Kunststoff-Formteiles, wobei
(a) in wenigstens einem ersten Bereich (22) eines Formhohlraumes (16) eines Formwerkzeuges (10) ein erstes Abdeckmaterial (24) eingebracht wird;
(b) in wenigstens einem zweiten, zum ersten Bereich (22) benachbarten Bereich (26) des Formhohlraumes (16) ein zweites Abdeckmaterial (28) eingebracht wird;
(c) die Abdeckmaterialien (24, 28) so eingebracht werden, dass diese sich zur Ausbildung eines Übergangsbereiches (30) in ihren Randabschnitten (38, 40) berühren oder überlappen;
(d) der Formhohlraum (16) entlang des wenigstens einen Übergangsbereiches (30) zumindest teilweise abgedichtet wird, so dass wenigstens zwei Teil-Formhohlräume (46, 48) entstehen und
(e) in wenigstens einen der Teil-Formhohlräume (46, 48) eine Schmelze (52, 54) eines Kunststoffes eingebracht wird,
**dadurch gekennzeichnet, dass**
(f) nach Erreichen eines vorgegebenen Füllungsgrades der Schmelze (52, 54) in wenigstens einem der Teil-Formhohlräume (46, 48) der Übergangsbereich (30) freigegeben wird und hierdurch ein weiterer Teil-Formhohlraum (60) erzeugt wird und
(g) in diesen weiteren Teil-Formhohlraum die Schmelze (52, 54) des Kunststoffes eingebracht wird.

2. Verfahren nach Anspruch 1, **dadurch gekennzeichnet, dass** die Schmelze (52, 54) des Kunststoffes zunächst in einen der ersten Teil-Formhohlräume (46) eingebracht wird, anschließend in den wenigstens einen Übergangsbereich (30) eingebracht wird und anschließend in den wenigstens einen weiteren Teil-Formhohlraum (48) eingebracht wird.

3. Verfahren nach Anspruch 1, **dadurch gekennzeichnet, dass** zunächst eine erste Schmelze (52) eines Kunststoffes in den wenigstens einen ersten Teil-Formhohlraum (46) eingebracht wird, gleichzeitig, anschließend oder zumindest zeitversetzt eine zweite Schmelze (54) eines Kunststoffes in den wenigstens einen zweiten Teil-Formhohlraum (48) eingebracht wird und anschließend der wenigstens eine weitere Teil-Formhohlraum (60) im Übergangsbereich (30) erzeugt wird und dieser dann mit der ersten Schmelze (52) und/oder der zweiten Schmelze (54) aufgefüllt wird.

4. Verfahren nach einem der vorhergehenden Ansprüche, **dadurch gekennzeichnet, dass** der wenigstens eine weitere Teil-Formhohlraum (60) im Übergangsbereich (30) durch eine Fließfront (56, 58) der ersten Schmelze (52) und/oder der zweiten Schmelze (54) erzeugt wird.

5. Verfahren nach einem der vorhergehenden Ansprüche, **dadurch gekennzeichnet, dass** der wenigstens eine weitere Teil-Formhohlraum (60) im Übergangsbereich (30) durch pneumatische, hydraulische, elektrische und/oder mechanische Mittel erzeugt wird.

6. Verfahren nach einem der vorhergehenden Ansprüche, **dadurch gekennzeichnet, dass** die Fließfront (56, 58) wenigstens eines der Abdeckmaterialien (24, 28) in ihren Randbereichen (38, 40) in ihre Endposition verlagert.

7. Vorrichtung zur Herstellung eines Kunststoff-Formteiles mit
(a) einer ersten Matrize (12) und einer gegenüberliegenden zweiten Matrize (14), welche einen die Form des Kunststoff-Formteiles zumindest teilweise nachbildenden Formhohlraum (16) ausbilden;
(b) Mitteln, welche der Anlage eines ersten Abdeckmaterials (24) und eines zweiten Abdeckmaterials (28) in aneinander grenzenden Bereichen des Formhohlraumes (16) dienen;
(c) einem ersten Mittel (32), das in einem Übergangsbereich (30) der Abdeckmaterialien (24, 28) den Formhohlraum (16) zur Ausbildung von Teil-Formhohlräumen (46, 48) abdichtet und
(d) wenigstens einer Einrichtung, insbesondere Düse, Stange oder dergleichen, (42, 44) zum Einbringen einer Schmelze (52, 54) in den Formhohlraum (16)
**dadurch gekennzeichnet, dass**
(e) dem ersten Mittel (32) zweite Mittel (50) zugeordnet sind, durch die nach Erreichen eines vorgegebenen Füllungsgrades des Formhohlraumes (16) das erste Mittel (32) aus dem Formhohlraum (16) verlagerbar ist.

8. Vorrichtung nach Anspruch 7, **dadurch gekennzeichnet, dass** jedem der Teil-Formhohlräume (46, 48) wenigstens eine Einrichtung, insbesondere Düse, (42, 44) zum Einbringen der Schmelze (52, 54) zugeordnet ist.

9. Vorrichtung nach Anspruch 7, **dadurch gekennzeichnet, dass** das zweite Mittel (50), das zur Verlagerung des ersten Mittels (32) dient, in das erste Mittel (32) integriert ist.

10. Vorrichtung nach Anspruch 9, **dadurch gekennzeichnet, dass** das zweite Mittel (50) ein Federelement ist.

11. Vorrichtung nach Anspruch 7, **dadurch gekennzeichnet, dass** das erste Mittel (32) Auflaufelemente, insbesondere zu einer Hubrichtung (34) nicht parallel verlaufende Auflaufflächen, (36, 64) umfasst, die von einer Fließfront (56, 58) der Schmelze (52, 54) mit einer Fließkraft beaufschlagbar sind.

12. Vorrichtung nach Anspruch 7 oder Anspruch 9, **dadurch gekennzeichnet, dass** das zweite Mittel eine Hydraulik, Pneumatik, Elektromechanik und/oder Mechanik umfasst.

13. Vorrichtung nach einem der Ansprüche 7 oder 11, **dadurch gekennzeichnet, dass** das erste Mittel (32) in die erste Matrize (12) integriert ist.

14. Vorrichtung nach einem der Ansprüche 7 oder 11, **dadurch gekennzeichnet, dass** das erste Mittel (32) in die zweite Matrize (14) integriert ist.

## Claims

1. Method for manufacturing a synthetic-material moulded part, wherein
(a) a first covering material (24) is introduced into at least one first region (22) of a mould cavity (16) of a die (10);
(b) a second covering material (28) is introduced into at least one second region (26) adjacent to the first region (22) of the mould cavity (16);
(c) the covering materials (24, 28) are introduced in such a manner that they touch or overlap one another to form a transitional region (30) at their edge portions (38, 40);
(d) the mould cavity (16) is at least partially sealed along the at least one transitional region (30), so that at least two partial mould cavities (46, 48) are formed and;
(e) a molten mass (52, 54) of a synthetic material is introduced into at least one of the partial mould cavities (46, 48),
**characterised in that**
(f) after a predetermined filling level of the molten mass (52, 54) has been reached in at least one of the partial mould cavities (46, 48), the transitional region (30) is released, and, as a result, a further partial mould cavity (60) is formed and
(g) the molten mass (52, 54) of the synthetic material is introduced into this further partial mould cavity.

2. Method according to claim 1, **characterised in that** the molten mass (52, 54) of the synthetic material is first introduced into one of the first partial mould cavities (46), subsequently introduced into the at least one transitional region (30) and then introduced into the at least one further partial mould cavity (48).

3. Method according to claim 1, **characterised in that** initially, a first molten mass (52) of a synthetic material is introduced into the at least one first partial mould cavity (46); that, at the same time, subsequently or at least with a time delay, a second molten mass (54) of a synthetic material is introduced into the at least one second partial mould cavity (48); that, subsequently, the at least one further partial mould cavity (60) is produced in the transitional region (30); and that this is then filled with the first molten mass (52) and/or the second molten mass (54).

4. Method according to any one of the preceding claims, **characterised in that** the at least one further partial mould cavity (60) is formed in the transitional region (30) by a flow front (56, 58) of the first molten mass (52) and/or of the second molten mass (54).

5. Method according to any one of the preceding claims, **characterised in that** the at least one further partial mould cavity (60) is formed in the transitional region (30) by pneumatic, hydraulic, electrical and/or mechanical means.

6. Method according to any one of the preceding claims, **characterised in that** the flow front (56, 58) displaces at least one of the covering materials (24, 28) at its edge regions (38, 40) into its final position.

7. Device for manufacturing a synthetic-material moulded part comprising:
(a) a first female mould (12) and an opposing second female mould (14), which form a mould cavity (16) at least partially modelling the shape of the synthetic-material moulded part;
(b) means, which are used to position a first covering material (24) and a second covering material (28) in mutually adjacent regions of the mould cavity (16);
(c) a primary means (32), which seals the mould cavity (16) in a transitional region (30) of the covering materials (24, 28) forming partial mould cavities (46, 48) and
(d) at least one component, especially a nozzle, lance or similar (42, 44) for introducing a molten mass (52, 54) into the molten cavity (16),
**characterised in that**
(e) secondary means (50) are allocated to the primary means (32), by means of which, the primary means (32) can be displaced out of the mould cavity (16) after a predetermined filling level of the mould cavity (16) has been reached.

8. Device according to claim 7, **characterised in that** at least one device, especially a nozzle (42, 44) for introducing the molten mass (52, 54) is allocated to each of the partial mould cavities (46, 48).

9. Device according to claim 7, **characterised in that** the secondary means (50), which is used for the displacement of the primary means (32), is integrated with the primary means (32).

10. Device according to claim 9, **characterised in that** the secondary means (50) is a spring element.

11. Device according to claim 7, **characterised in that** the primary means (32) comprises leading elements, especially leading surfaces (36,64) extending in a direction, which is not parallel to a stroke direction (34), upon which leading surfaces (36,64) a flow force from a flow front (56, 58) of the molten mass (52, 54) can impinge.

12. Device according to claim 7 or claim 9,
**characterised in that** the secondary means comprises a hydraulic, pneumatic, electromechanical or mechanical means.

13. Device according to any one of claims 7 or 11,
**characterised in that** the primary means (32) is integrated into the first female mould (12).

14. Device according to any one of claims 7 or 11,
**characterised in that** the primary means (32) is integrated into the second female mould (14).

## Revendications

1. Procédé de fabrication d'une pièce moulée en matière plastique, dans lequel :
(a) une première matière de recouvrement (24) est mise dans au moins une première zone (22) d'une cavité de formage (16) d'un outil de formage (10) ;
(b) une deuxième matière de recouvrement (28) est mise dans au moins une deuxième zone (26) de la cavité de formage (16) voisine de la première zone (22) ;
(c) les matières de recouvrement (24, 28) sont mises de telle sorte que celles-ci se touchent ou se chevauchent dans leurs sections marginales (38, 40) en vue de réaliser une zone de transition (30) ;
(d) la cavité de formage (16) est partiellement rendue étanche le long de la, au moins une, zone de transition (30) de manière à ce qu'il en résulte au moins deux parties de cavité de formage (46, 48) ; et
(e) une fonte (52, 54) de matière plastique est mise dans au moins une des parties de cavité de formage (46, 48) ;
**caractérisé en ce que**
(f) lorsqu'un degré de remplissage prédéfini des fontes (52, 54) dans au moins une des parties de cavité de formage (46, 48) a été atteint, la zone de transition (30) est libérée, créant ainsi une autre partie de cavité de formage (60), et
(g) la fonte (52, 54) de la matière plastique est introduite dans cette autre partie de cavité de formage.

2. Procédé selon la revendication 1, **caractérisé en ce que** la fonte (52, 54) de la matière plastique est tout d'abord introduite dans l'une des premières parties de cavité de formage (46), puis est introduite dans l'au moins une zone de transition (30) et est ensuite mise dans l'au moins une autre partie de cavité de formage (48).

3. Procédé selon la revendication 1, **caractérisé en ce que**, tout d'abord, une première fonte (52) d'une matière plastique est mise dans la, au moins une, première partie de cavité de formage (46), puis une deuxième fonte (54) d'une matière plastique est mise, en même temps, ou au moins de manière décalée dans le temps, dans la, au moins une, deuxième partie de cavité de formage (48), et ensuite, la, au moins une, autre partie de cavité de formage (60) située dans la zone de transition (30) est créée puis est remplie avec la première fonte (52) et/ou avec la deuxième fonte (54).

4. Procédé selon l'une des revendications précédentes, **caractérisé en ce que** la, au moins une, autre partie de cavité de formage (60) située dans la zone de transition (30) est créée par un front de coulée (56, 58) de la première fonte (52) et/ou de la deuxième fonte (54).

5. Procédé selon l'une des revendications précédentes, **caractérisé en ce que** la, au moins une, autre partie de cavité de formage (60) située dans la zone de transition (30) est créée à l'aide de moyens pneumatiques, hydrauliques, électriques et/ou mécaniques.

6. Procédé selon l'une des revendications précédentes, **caractérisé en ce que** le front de coulée (56, 58) déplace les zones marginales (38, 40) d'au moins l'une des matières de recouvrement (24, 28) dans leur position finale.

7. Dispositif de fabrication d'une pièce moulée en matière plastique comportant :
(a) une première matrice (12) et une deuxième matrice située en regard (14), lesquelles constituent une cavité de formage (16) reproduisant au moins en partie la forme de la pièce moulée en matière plastique ;
(b) des moyens qui servent à appliquer une première matière de recouvrement (24) et une deuxième matière de recouvrement (28) dans des zones de la cavité de formage (16) mutuellement contiguës ;
(c) un premier moyen (32) qui, dans une zone de transition (30) des matières de recouvrement (24, 28), rend étanche la cavité de formage (16) en vue de réaliser des parties de cavité de formage (46, 48) ; et
(d) au moins un dispositif, notamment une buse, une tige ou analogue, (42, 44) servant à introduire une fonte (52, 54) dans la cavité de formage (16) ;
**caractérisé en ce que**
(e) des deuxièmes moyens (50) à l'aide desquels le premier moyen (32) peut être déplacé hors de la cavité de formage (16) après qu'un degré de remplissage prédéfini de la cavité de formage (16) a été atteint, sont associés au premier moyen (32).

8. Dispositif selon la revendication 7, **caractérisé en ce qu'**au moins un dispositif, notamment une buse, (42, 44) servant à introduire la fonte (52, 54) est associé à chacune des parties de cavité de formage (46, 48).

9. Dispositif selon la revendication 7, **caractérisé en ce que** le deuxième moyen (50), qui sert au déplacement du premier moyen (32), est intégré dans le premier moyen (32).

10. Dispositif selon la revendication 9, **caractérisé en ce que** le deuxième moyen (50) est un élément ressort.

11. Dispositif selon la revendication 7, **caractérisé en ce que** le premier moyen (32) comprend des éléments d'arrêt, notamment des surfaces d'arrêt (36, 64) qui ne s'étendent pas parallèlement à une direction de levage (34), sur lesquels la force d'écoulement d'un front de coulée (56, 58) de la fonte (52, 54) peut s'exercer.

12. Dispositif selon la revendication 7 ou la revendication 9, **caractérisé en ce que** le deuxième moyen comprend un dispositif hydraulique, pneumatique, électromécanique et/ou mécanique.

13. Dispositif selon l'une des revendications 7 ou 11, **caractérisé en ce que** le premier moyen (32) est intégré dans la première matrice (12).

14. Dispositif selon l'une des revendications 7 ou 11, **caractérisé en ce que** le premier moyen (32) est intégré dans la deuxième matrice (14).
